# EUROPÄISCHE PATENTSCHRIFT

(11) **EP 3 031 599 B1**
(45) Veröffentlichungstag und Bekanntmachung des Hinweises auf die Patenterteilung: **27.02.2019**
(21) Anmeldenummer: 14197261.2
(22) Anmeldetag: 11.12.2014
(51) Int. Cl.: B29C 65/34, F16L 47/03, F16L 59/20

(54) **Isoliertes Elektroschweissfitting**
Insulated electrofusion fitting
Raccord électrosoudable isolé

(43) Veröffentlichungstag der Anmeldung: 15.06.2016
(73) Patentinhaber: Georg Fischer Rohrleitungssysteme AG, 8201 Schaffhausen (CH)
(72) Erfinder: Schöller, Stefan, 78250 Tengen (DE); Muckenschnabel, Harald, 78224 Singen (DE); Hunnekuhl, Jörg, 79798 Jestetten (DE)
(74) Vertreter: Fenner, Seraina

(56) Entgegenhaltungen:
- EP-A1- 0 048 065
- EP-A1- 0 075 901
- EP-A2- 2 525 129
- CH-A5- 662 402

## Beschreibung

Die Erfindung betrifft ein isoliertes Elektroschweissfitting zur Verbindung von Endbereichen von Rohrleitungen aus thermoplastischem Kunststoff insbesondere von vorisolierten Rohrleitungen und dessen Herstellverfahren beinhaltend eine Elektroschweissmuffe, wobei die Elektroschweissmuffe mindestens ein elektrisches Heizelement aufweist, wobei das Heizelement vorzugsweise als Heizdrahtwicklung ausgebildet ist, mindestens einen Kontakt zur Zuführung des elektrischen Stroms, mindestens eine Schweissanzeige und ein Isolationselement, wobei das Isolationselement am Aussenumfang der Elektroschweissmuffe angeordnet ist.

Bei Anwendungen bei denen eine gute Dämmung des Mediums in der Rohrleitung gegenüber den Umgebungsbedingungen benötigt wird, werden meist vorisolierte Rohrleitungen eingesetzt. Bspw. werden solch vorisolierte Rohrleitungen für den Transport bei Kälteträgermedien eingesetzt. Um das Medium transportierende Rohr ist meist eine isolierende Dämmschicht angeordnet, welche von einer Aussenhaut umgeben ist die zum Schutz der Dämmschicht gegen äussere Einflüsse wie bspw. Feuchtigkeit dient. Der Aussenmantel kann auch durch ein konzentrisch angeordnetes Aussenrohr gebildet werden.

Das Verbinden solcher vorisolierter Rohrleitungen ist entsprechend aufwendig da an den zu verbindenden Enden die Isolation erst entfernt werden muss und nach dem Verbinden mit einem Rohrverbindungsformteil die Isolation wieder manuell angebracht werden muss.

Die EP 1 909 018 B1 offenbart ein Rohrverbindungsformteil mit thermischer Isolierung. Beim Anbringen dieses Rohrverbindungsformteils ist ein Isolieren nach dem Einbau in das Rohrleitungssystem nicht mehr nötig da die Isolation bereits am Rohrverbindungsformteil angeordnet ist, wodurch der Aufwand für die nachträgliche Isolierung eingespart werden kann.

Nachteilig an diesem Rohrverbindungsformteil ist jedoch dass dieses Formteil nur als klebbares Verbindungsformteil vorliegt.

Bei manchen Anwendungen wird eine Verbindung von Rohrleitungen durch Elektroschweissmuffen vorausgesetzt. Das heisst, dass eine Elektroschweissmuffe zur Verbindung benötigt wird. Solche Elektroschweissmuffen sind bekannt z.B. CH 689 024 A5 offenbart eine solche. Nachteilig bei einer Verbindung von vorisolierten Rohrleitungen mittels einer Elektroschweissmuffe ist der hohe Montageaufwand da nach dem Verschweissen der Rohrleitung mit der Muffe noch die Isolation anzubringen ist. Zudem ist es von Vorteil, wenn um die Isolationsschicht die bspw. durch Umlegen von Schaumstoff um die Muffe gebildet wird, noch eine Schutzschicht gewickelt wird. Das bedingt aber einen enorm hohen Montageaufwand wie auch keine Dichtheit gegenüber Feuchtigkeit bzw. keinen dampfdichten Aussenmantel, was zu einer ungewollten Kondensation führt.

Dokument EP 0 048 065 A1 offenbart ein isoliertes Fitting zur Verbindung von Endbereichen von Rohrleitungen aus thermoplastischem Kunststoff, insbesondere von Rohrleitungen, beinhaltend eine Muffe, wobei die Muffe mindestens ein elektrisches Heizelement aufweist, mindestens einen Kontakt zur Zuführung des elektrischen Stroms, ein Isolationselement, wobei das Isolationselement am Aussenumfang der Muffe angeordnet ist, wobei das isolierte Fitting einen Aussenmantel aus Kunststoff aufweist.

Dokumente EP 0 075 901 A1, CH 662 402 A5 und EP 2 525 129 A2 offenbaren ein Elektroschweissfitting mit einer Schweissanzeige.

Es ist Aufgabe der Erfindung ein isoliertes Elektroschweissfitting und ein damit verbundenes Verfahren zur Herstellung eines solchen vorzuschlagen, dass die Montagezeit verringert, wie auch eine dampfdichte Verbindung zwischen dem isolierten Elektroschweissfitting und der vorisolierten Rohrleitung gebildet wird.
Die Aufgabe wird erfindungsgemäss dadurch gelöst, dass das isolierte Elektroschweissfitting einen Aussenmantel aus Kunststoff aufweist, wobei der Aussenmantel durch Umgiessen des Isolationselements gebildet wird.
Das erfindungsgemässe isolierte Elektroschweissfitting beinhaltet eine Elektroschweissmuffe, wobei vorzugsweise eine herkömmliche Elektroschweissmuffe verwendet wird. Unter einer herkömmlichen Elektroschweissmuffe ist eine Elektroschweissmuffe zu verstehen, die aus dem Stand der Technik bekannt ist und zur Verbindung der Rohrleitungsenden aus thermoplastischem Kunststoff dient. Dadurch kann die Herstellung von speziellen Elektroschweissmuffen vermieden werden, wodurch die Herstellkosten für das isolierte Elektroschweissfitting optimiert werden können. Natürlich können aber auch speziell für das isolierte Elektroschweissfitting Elektroschweissmuffen hergestellt werden was den Vorteil hätte, dass gewisse konstruktive Features angebracht werden könnten, die bspw. das Anbringen des Isolationselements oder auch den Vorgang des Umgiessens oder des Skinning-Verfahrens bzw. RIM-Verfahren optimieren könnten. Die Elektroschweissmuffe weist mindestens ein Heizelement auf, wobei vorzugsweise eine Heizdrahtwicklung dazu eingesetzt wird. Zur Zuführung des elektrischen Stroms weist die Elektroschweissmuffe einen Kontakt auf, vorzugsweise weist jedes Heizelement einen eigenen Kontakt auf. Zur Anzeige ob eine Schweissung stattgefunden hat, weist die Elektroschweissmuffe eine Schweissanzeige auf. Auch hier ist es von Vorteil, wenn bei jedem Heizelement eine Schweissanzeige angeordnet ist, wodurch sich erkennen lässt, welche Schweissung durchgeführt wurde und welche nicht.

Zur Dämmung ist um die Elektroschweissmuffe ein Isolationselement angeordnet. Dadurch wird das Medium im Rohrleitungssystem gegenüber der Umgebungstemperatur isoliert bzw. das Rohrleitungssystem ist dadurch auch im Bereich von Verbindungsstellen isoliert bzw. vorisoliert.

Das erfindungsgemässe isolierte Elektroschweissfitting weist einen Aussenmantel aus Kunststoff auf. Der Aussenmantel des isolierten Elektroschweissfittings umschliesst das Isolationselement, wodurch ein dampfdichtes isoliertes Elektroschweissfitting gebildet wird.

Das isolierte Elektroschweissfitting wird somit komplett vorgefertigt, wodurch bei der Montage auf der Baustelle nach dem Schweissvorgang kein nachträgliches Isolieren des Verbindungsteils bzw. der Elektroschweissmuffe in Bezug auf das anzuschliessende Rohrende benötigt wird, da die Elektroschweissmuffe bereits vorisoliert ist.

Zur Optimierung der Isolation ist es von Vorteil, wenn die Ausnahmen in der Isolation bzw. im Isolationselement für die Kontakte und die Schweissanzeigen nach dem Anbringen des isolierten Elektroschweissfittings noch isoliert werden.

Der Aussenmantel ist um das Isolationselement gegossen oder wird durch das Skinning-Verfahren aufgebracht, auch bekannt unter RIM-Verfahren.

Der Aussenmantel ist stabil. Das heisst, er dient auch dem Schutz des isolierten Elektroschweissfittings bzw. des Isolationselements. Das Fitting ist durch den stabilen Aussenmantel nicht einfach eindrück- oder beschädigbar. Wie bereits zuvor beschrieben, wird das erfindungsgemässe isolierte Elektroschweissfitting komplett vorgefertigt. Das heisst, dass die Elektroschweissmuffe im Werk am Aussenumfang mit dem Isolationselement versehen wird, wobei das Isolationselement vorzugsweise mittels eines Bandes oder sonstigen Befestigungsmittels an der Elektroschweissmuffe fixiert und dann mit einem Kunststoff umgossen wird, der den Aussenmantel bildet. Alternativ kann das isolierte Elektroschweissfitting auch durch das Skinning-Verfahren bzw. RIM-Verfahren hergestellt werden, wobei dann das Isolationselement durch Schäumen gebildet wird indem der in eine Form bzw. Werkzeug aufgetragene Aussenmantel aus Kunststoff und die mehr oder weniger konzentrisch dazu eingelegte Elektroschweissmuffe umschäumt bzw. der Bereich zwischen Aussenmantel und Elektroschweissmuffe ausgeschäumt wird.

Das am Aussenumfang der Elektroschweissmuffe angeordnete Isolationselement besteht vorzugsweise aus zwei Schalen.

Vorteilhaft ist es, wenn die Schalen jeweils als Halbschalen ausgebildet sind, dadurch lässt sich ein einfaches Anlegen um die Elektroschweissmuffe ermöglichen. Es sind auch andere Teilungen des Isolationselements vorstellbar, zu bevorzugen sind solche, wodurch sich das Isolationselement einfach um die Elektroschweissmuffe legen lässt.

Alternativ kann das Isolationselement durch Ausschäumen des Bereichs zwischen der Elektroschweissmuffe und dem Aussenmantel gebildet werden.

Das Isolationselement ist passgenau um die Elektroschweissmuffe angeordnet, wodurch eine optimale Dämmung erreicht wird.

Das Isolationselement weist vorzugsweise Aussparungen für den Kontakt und die Schweissanzeige auf, dadurch wird der Zugang zum Kontakt und somit das Anschliessen des elektrischen Stroms gewährleistet, wie auch durch die Aussparung im Isolationselement für die Schweissanzeige das Erkennen ob eine Schweissung stattgefunden, hat ermöglicht wird.

Entsprechend den Ausnahmen im Isolationselement weist auch der Aussenmantel Ausnahmen auf, wodurch der Kontakt und die Schweissanzeige zugänglich und ersichtlich sind.

Eine bevorzugte Ausgestaltung des erfindungsgemässen isolierten Elektroschweissfittings besteht darin, dass das isolierte Elektroschweissfitting eine Überstandslippe aufweist. Die Überstandslippe ist jeweils stirnseitig angeordnet und ragt über die Stirnseite des Isolationselements hinaus.

Die Überstandslippe dient der optimalen Abdichtung.

Die Überstandslippen sind beidseitig des Fittings angeordnet und werden bei der Montage über die isolierten Rohrenden geschoben bzw. gestülpt, wodurch auch hier kein nachträglich zu isolierender Spalt entsteht.

Am Innenumfang der Überstandslippe ist eine Nase angeordnet, welche sich entlang des Innenumfangs der Überstandslippe erstreckt. Sie dient der Haftung der Überstandslippe am angeschlossenen Rohrleitungsende bzw. auch einer Verbesserung der Abdichtung gegen Schmutz.

Es hat sich gezeigt, dass der Aussenmantel vorzugsweise aus PUR oder Polyurea / PUR-Hybrid herzustellen ist.

Der bevorzugte Werkstoff für das Isolationselement ist PUR-Hartschaum.

Das erfindungsgemässe isolierte Elektroschweissfitting kann neben einem geraden Fitting bzw. Verbindungsformteil auch als T-Stück oder Y-Stück zum Verbinden von drei Rohrleitungsenden oder als Winkelstück wie auch als Bogensegment ausgebildet sein. Ebenso ist die vorliegende Erfindung als Reduzierstück umsetzbar, welches auch kombinierbar mit jeglicher zuvor erwähnten Formgestaltung ist.

Das Verfahren zur Herstellung eines erfindungsgemässen isolierten Elektroschweissfitting zur Verbindung von Endbereichen von Rohrleitungen aus thermoplastischem Kunststoff, insbesondere von vorisolierten Rohrleitungen beinhaltet eine Elektroschweissmuffe, wobei die Elektroschweissmuffe vorzugsweise durch eine herkömmliche aus dem Stand der Technik bekannte Elektroschweissmuffe gebildet wird. Wie zuvor erwähnt kann aber auch eine spezifisch für diese Anwendung hergestellte Elektroschweissmuffe eingesetzt werden.

Die zuvor beschriebenen Ausführungen sind entsprechend auch auf das Verfahren umsetzbar.

Am Aussenumfang der Elektroschweissmuffe wird ein passgenaues Isolationselement angebracht, wodurch eine optimale Isolierung erreicht wird. Um das Isolationselement wird ein Aussenmantel aus Kunststoff durch Umgiessen aufgebracht.

Alternativ kann der Aussenmantel durch das Skinning-Verfahren bzw. RIM-Verfahren hergestellt werden, wodurch ebenfalls ein stabiler und dampfdichter Aussenmantel gebildet wird. Dazu wird die Form bzw. das Werkzeug, welches der Aussenkontur des isolierten Elektroschweissfittings entspricht mit Kunststoff beschichtet, der dann den Aussenmantel bildet. Dann wird die Elektroschweissmuffe in die Form eingelegt und der Bereich zwischen Elektroschweissmuffe und Aussenmantel umschäumt. Das Isolationselement wird vorzugsweise mittels eines Bandes an der Elektroschweissmuffe fixiert, wobei auch andere Befestigungsmittel denkbar sind.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht eines erfindungsgemässen isolierten Elektroschweissfittings,
- Fig. 2: einen Längsschnitt durch ein erfindungsgemässes isoliertes Elektroschweissfitting,
- Fig. 3: eine dreidimensionale Ansicht eines erfindungsgemässen isolierten Elektroschweissfittings ohne Aussenmantel und
- Fig. 4: einen Längsschnitt durch ein erfindungsgemässes isoliertes Elektroschweissfitting, das bereits in ein isoliertes Rohrleitungssystem eingebaut ist.

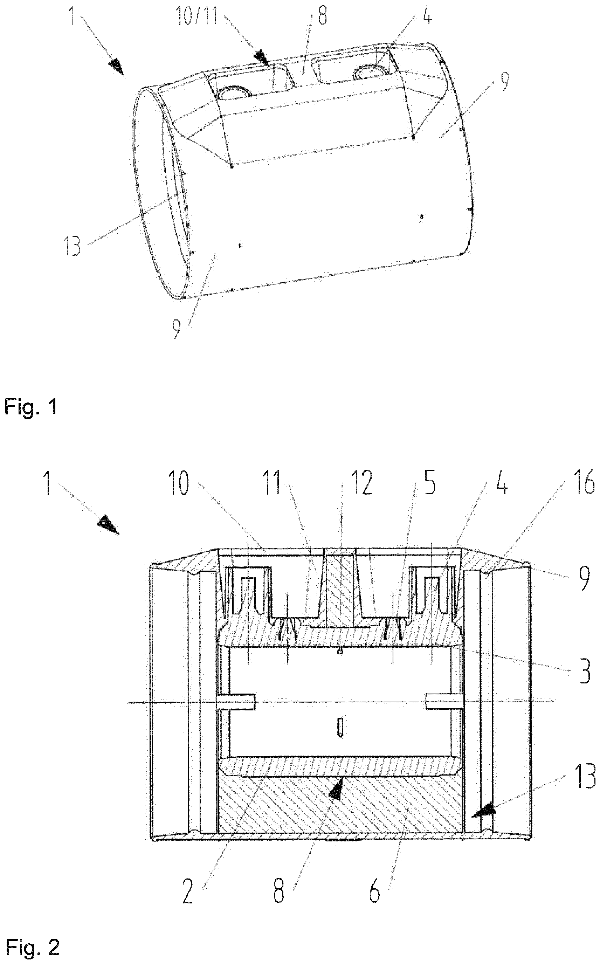

Fig. 1 zeigt das erfindungsgemässe isolierte Elektroschweissfitting 1. Der Aussenmantel 8 umgibt das Fitting 1 dampfdicht. Zudem ist der Aussenmantel 8 stabil und schützt das Fitting 1 bzw. dass darin angeordnete Isolationselement 6. Die Ausnahmen 10, 11 im Aussenmantel sowie im Isolationselement dienen dazu, dass einerseits der Zugang zu den Kontakten 4 des Heizelements 3 zum Anschliessen des elektrischen Stroms gewährleistet ist und andererseits die Schweissanzeigen 3 sichtbar sind, welche anzeigen ob eine Schweissung bereits durchgeführt wurde oder nicht.

Die Überstandslippen 9, welche beidseitig des erfindungsgemässen isolierten Elektroschweissfittings 1 angeordnet sind ragen über die Stirnseiten 13 des Isolationselements 6 hinaus, welche vorzugsweise mit den Stirnseiten der Elektroschweissmuffe 2 bündig sind bzw. eine Ebene bilden. Durch die Überstandslippen 9 wird nach der Montage eine dampfdichte Verbindung erzielt, wodurch das Isolationselement 6 vor Feuchtigkeit geschützt ist und eine Kondensation vermieden werden kann.

Fig. 2 zeigt einen Längsschnitt durch das erfindungsgemässe Elektroschweissfitting 1. Das Fitting 1 beinhaltet eine Elektroschweissmuffe 2, wobei vorzugsweise aus Kostengründen eine herkömmliche Elektroschweissmuffe 2 eingesetzt werden kann. Die Elektroschweissmuffe 2 weist bei jedem Anschlussstutzen, welcher mit einem Endbereich 15 der Rohrleitung zu verbinden ist, ein Heizelement 3 auf, welches vorzugsweise durch eine Heizdrahtwicklung 3 gebildet wird. Zur Zuführung des elektrischen Stromes dienen Kontakte 4, vorzugsweise weist jedes Heizelement 3 seinen eigenen Kontakt 4 auf. Zudem weist die Elektroschweissmuffe 2 Schweissanzeigen 5 auf, wobei ebenfalls jedes Heizelement 3 eine entsprechende Anzeige 5 aufweist.

Am Aussenumfang 7 der Elektroschweissmuffe 2 ist das Isolationselement 6 angeordnet. Vorzugsweise ist es passgenau um die Elektroschweissmuffe 2 angebracht, wodurch eine optimale Dämmung erzielt wird. Bspw. mittels eines Bandes (nicht dargestellt) oder eines alternativen Befestigungsmittels wird das Isolationselement 6 an der Elektroschweissmuffe 2 fixiert. Das Isolationselement 6 besteht vorzugsweise aus zwei Schalen, die vorzugsweise als Halbschalen ausgebildet sind. Diese werden um die Elektroschweissmuffe 2 gelegt und bspw. mittels eines Bandes (nicht dargestellt) fixiert. Damit das Isolationselement 6 passgenau um die Elektroschweissmuffe 2 gelegt werden kann, weist das Isolationselement 6 Ausnahmen 11 auf, welche die Kontakte 4 und Schweissanzeigen 5 der Elektroschweissmuffe 2 zugänglich und ersichtlich machen.

Um das Isolationselement 6, welches vorzugsweise aus PUR-Hartschaum gebildet ist, ist ein Aussenmantel 8 angeordnet. Dieser ist stabil und bildet eine dampfdichte Hülle. Der Aussenmantel 8 weist ebenfalls Ausnahmen 10 auf um ebenfalls den Zugang sowie die Sicht zu den Kontakten 4 und Schweissanzeigen 5 zu ermöglichen. Der Aussenmantel 8 wird durch Umgiessen des Isolationselements 6, welches am Aussenumfang 7 der Elektroschweissmuffe 2 angeordnet ist erzeugt.

Der Aussenmantel 8 ist vorzugsweise aus PUR oder Polyurea/PUR-Hybrid.

Der Aussenmantel 8 weist Überstandslippen 9 auf, welche über die Stirnseiten 13 des Isolationselements 6 hinausragen, wodurch beim Einbau in das Rohrleitungssystem eine optimale Dichtheit erreicht wird. Am Innenumfang der Überstandslippe (9) ist eine Nase (16) angeordnet, welche entlang des Innenumfangs der Überstandslippe (9) verläuft. Sie dient einer bessern Abdichtung sowie einer besseren Haftung zwischen der Überstandslippe (9) und dem Endbereich der vorisolierten Rohrleitung (14)

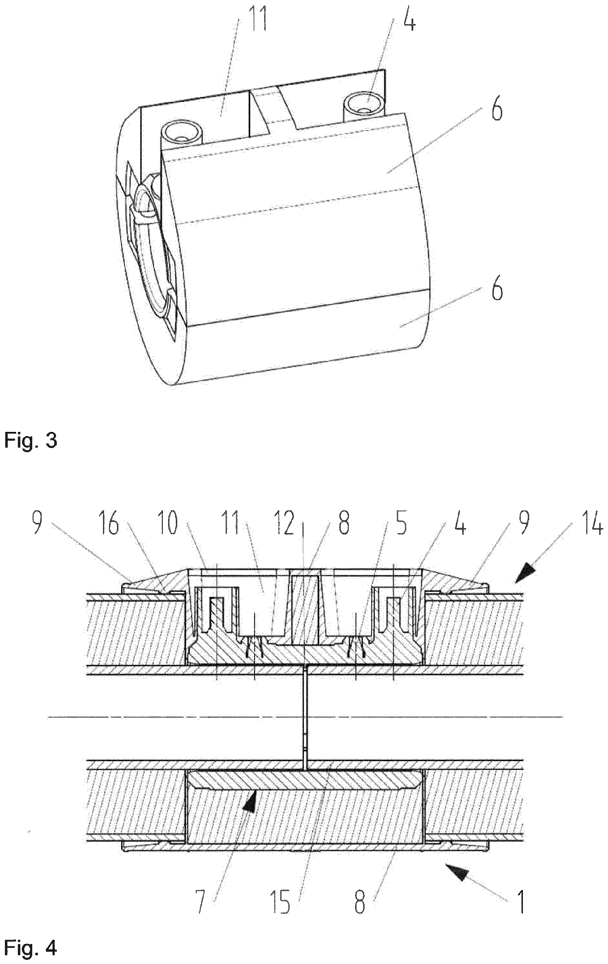

Fig. 3 stellt das erfindungsgemässe Elektroschweissfitting 1 ohne den gegossenen Aussenmantel dar. Dabei ist gut erkennbar, dass das Isolationselement 6 aus mehreren Teilen gebildet wird. Die hier dargestellte Ausführungsform weist zwei Halbschalen auf, was als bevorzugte Ausführungsform gilt, wobei aber auch eine andere Teilung möglich ist.

Wie zuvor erwähnt, sind auch erfindungsgemässe isolierte Elektroschweissfittings 1 denkbar, die durch das Skinning-Verfahren bzw. RIM-Verfahren hergestellt sind, wobei dort das Isolationselement 6 durch Schäumen angebracht wird indem es zwischen die innenliegenden Elektroschweissmuffe 2 und dem Aussenmantel 8 geschäumt wird, der bereits zuvor in die Form bzw. Werkzeug aufgebracht wurde.

In Fig. 4 wird ein erfindungsgemässes isoliertes Elektroschweissfitting 1 aufgezeigt, das bereits im Rohrleitungssystem montiert ist. Die Endbereiche einer vorisolierten Rohrleitung 14 weisen über einen gewissen Abschnitt keine Isolation und kein Aussenrohr auf, sei es durch Abisolierung oder dass die Endrohre bereits so gefertigt wurden. Die Endbereiche der Innenrohre 15 sind beidseitig bis zum Anschlag 12 in die Elektroschweissmuffe 2 des erfindungsgemässen isolierten Elektroschweissfittings 1 eingeführt. Gut erkennbar ist, dass die Überstandslippen 9 über das Aussenrohr der vorisolierten Rohrleitung 14 ragen und so die Dampfdichtheit gewährleisten.

### Bezugszeichenliste

- 1: Isoliertes Elektroschweissfitting
- 2: Elektroschweissmuffe
- 3: Heizelement / Heizdrahtwicklung
- 4: Kontakt
- 5: Schweissanzeige
- 6: Isolationselement
- 7: Aussenumfang Elektroschweissmuffe
- 8: Aussenmantel
- 9: Überstandslippe
- 10: Ausnahme in Aussenmantel
- 11: Ausnahme in Isolationselement
- 12: Anschlag
- 13: Stirnseite Isolationselement
- 14: Endbereich einer vorisolierten Rohrleitung
- 15: Endbereich des Innerohres
- 16: Nase

## Patentansprüche

1. Isoliertes Elektroschweissfitting (1) zur Verbindung von Endbereichen (15) von Rohrleitungen aus thermoplastischem Kunststoff, insbesondere von vorisolierten Rohrleitungen (14) beinhaltend eine Elektroschweissmuffe (2), wobei die Elektroschweissmuffe mindestens ein elektrisches Heizelement (3) aufweist, wobei das Heizelement (3) vorzugsweise als Heizdrahtwicklung (3) ausgebildet ist, mindestens einen Kontakt (4) zur Zuführung des elektrischen Stroms, mindestens eine Schweissanzeige (5), ein Isolationselement (6), wobei das Isolationselement (6) am Aussenumfang (7) der Elektroschweissmuffe (2) angeordnet ist, wobei das isolierte Elektroschweissfitting (1) einen Aussenmantel (8) aus Kunststoff aufweist.

2. Isoliertes Elektroschweissfitting (1) nach Anspruch 1, **dadurch gekennzeichnet, dass** der Aussenmantel (8) stabil ausgebildet ist.

3. Isoliertes Elektroschweissfitting (1) nach einem der Ansprüche 1 oder 2, **dadurch gekennzeichnet, dass** das isolierte Elektroschweissfitting (1) komplett vorgefertigt ist.

4. Isoliertes Elektroschweissfitting (1) nach einem der Ansprüche 1 bis 3, **dadurch gekennzeichnet, dass** das Isolationselement (6) aus mindestens zwei Schalen vorzugsweise Halbschalen gebildet ist.

5. Isoliertes Elektroschweissfitting (1) nach einem der Ansprüche 1 bis 2, **dadurch gekennzeichnet, dass** das Isolationselement (6) durch Ausschäumen des Bereichs zwischen der Elektroschweissmuffe (2) und dem Aussenmantel (8) gebildet ist.

6. Isoliertes Elektroschweissfitting (1) nach einem der Ansprüche 1 bis 5, **dadurch gekennzeichnet, dass** das Isolationselement (6) Aussparungen (11) für den Kontakt und die Schweissanzeige aufweist.

7. Isoliertes Elektroschweissfitting (1) nach einem der Ansprüche 1 bis 6, **dadurch gekennzeichnet, dass** der Aussenmantel (8) des isolierten Elektroschweissfittings (1) eine Überstandslippe (9) aufweist, wobei die Überstandslippe (9) über die Stirnseite (13) des Isolationselements (6) hinaus ragt.

8. Isoliertes Elektroschweissfitting (1) nach Anspruch 7, **dadurch gekennzeichnet, dass** die Überstandslippe (9) am Innenumfang eine Nase (16) aufweist, wobei sich die Nase (16) über den Innenumfang der Überstandlippe (9) erstreckt.

9. Isoliertes Elektroschweissfitting (1) nach einem der Ansprüche 1 bis 8, **dadurch gekennzeichnet, dass** der Aussenmantel (8) des isolierten Elektroschweissfittings (1) aus PUR oder Polyurea / PUR-Hyprid ist.

10. Isoliertes Elektroschweissfitting (1) nach einem der vorangehenden Ansprüche, **dadurch gekennzeichnet, dass** das Isolationselement (1) aus PUR-Hartschaum ist.

11. Verfahren zur Herstellung eines isolierten Elektroschweissfittings (1) nach Anspruch 1, wobei die Elektroschweissmuffe (2) vorzugsweise durch eine herkömmliche Elektroschweissmuffe gebildet wird und ein passgenaues Isolationselement (6) am Aussenumfang (7) der Elektroschweissmuffe (2) angeordnet wird, wobei der Aussenmantel (8) durch Umgiessen des an der Elektroschweissmuffe (2) angeordnetes Isolationselements (6) oder durch das Skinning-Verfahren bzw. RIM gebildet wird.

## Claims

1. Insulated electrofusion fitting (1) for connecting end regions (15) of pipelines of thermoplastic materials, in particular of pre-insulated pipelines (14) containing an electrofusion coupler (2), wherein the electrofusion coupler has at least one electric heating element (3), wherein the heating element (3) is preferably configured as a heated wire winding (3), at least one contact (4) for supplying the electric current, at least one welding indicator (5), an insulating element (6), wherein the insulating element (6) is arranged on the outer periphery (7) of the electrofusion coupler (2), wherein the insulated electrofusion fitting (1) has an outer sheath (8) of plastic.

2. Insulated electrofusion fitting (1) according to Claim 1, **characterized in that** the outer sheath (8) has a stable design.

3. Insulated electrofusion fitting (1) according to one of Claims 1 or 2, **characterized in that** the insulated electrofusion fitting (1) is a completely pre-fabricated unit.

4. Insulated electrofusion fitting (1) according to one of Claims 1 to 3, **characterized in that** the insulating element (6) is formed from at least two shells, preferably half-shells.

5. Insulated electrofusion fitting (1) according to one of Claims 1 to 2, **characterized in that** the insulating element (6) is formed by foam-filling the region between the electrofusion coupler (2) and the outer sheath (8).

6. Insulated electrofusion fitting (1) according to one of Claims 1 to 5, **characterized in that** the insulating element (6) has recesses (11) for the contact and the welding indicator.

7. Insulated electrofusion fitting (1) according to one of Claims 1 to 6, **characterized in that** the outer sheath (8) of the insulated electrofusion fitting (1) has a protruding lip (9) wherein the protruding lip (9) projects beyond the end side (13) of the insulating element (6).

8. Insulated electrofusion fitting (1) according to Claim 7, **characterized in that** the protruding lip (9) has on the inner periphery a nose (16), wherein the nose (16) extends beyond the inner periphery of the protruding lip (9).

9. Insulated electrofusion fitting (1) according to one of Claims 1 to 8, **characterized in that** the outer sheath (8) of the insulated electrofusion fitting (1) is made of PUR or polyurea/PUR hybrid.

10. Insulated electrofusion fitting (1) according to one of the preceding claims, **characterized in that** the insulating element (1) is made of PUR hard foam.

11. Method for producing an insulated electrofusion fitting (1) according to Claim 1, wherein the electrofusion coupler (2) is preferably formed by a conventional electrofusion coupler, and a close-fitting insulating element (6) is arranged on the outer periphery (7) of the electrofusion coupler (2), wherein the outer sheath (8) is formed by encapsulating the insulating element (6) which is arranged on the electrofusion coupler (2) or by the skinning method or RIM.

## Revendications

1. Raccord pour soudage électrique isolé (1) destiné à la liaison de zones d'extrémité (15) de tuyauteries en matière thermoplastique, notamment de tuyauteries préisolées (14) contenant un manchon pour soudage électrique (2), le manchon pour soudage électrique possédant au moins un élément chauffant (3) électrique, l'élément chauffant (3) étant de préférence réalisé sous la forme d'un enroulement de fil chauffant (3), au moins un contact (4) servant à l'acheminement du courant électrique, au moins un témoin de soudage (5), un élément d'isolation (6), l'élément d'isolation (6) étant disposé sur le pourtour extérieur (7) du manchon pour soudage électrique (2), le raccord pour soudage électrique isolé (1) possédant une enveloppe extérieure (8) en matière plastique.

2. Raccord pour soudage électrique isolé (1) selon la revendication 1, **caractérisé en ce que** l'enveloppe extérieure (8) est de configuration stable.

3. Raccord pour soudage électrique isolé (1) selon l'une des revendications 1 ou 2, **caractérisé en ce que** le raccord pour soudage électrique isolé (1) est entièrement préfabriqué.

4. Raccord pour soudage électrique isolé (1) selon l'une des revendications 1 à 3, **caractérisé en ce que** l'élément d'isolation (6) est constitué d'au moins deux coques, de préférence des demies coques.

5. Raccord pour soudage électrique isolé (1) selon l'une des revendications 1 à 2, **caractérisé en ce que** l'élément d'isolation (6) est formé par expansion de la zone entre le manchon pour soudage électrique (2) et l'enveloppe extérieure (8).

6. Raccord pour soudage électrique isolé (1) selon l'une des revendications 1 à 5, **caractérisé en ce que** l'élément d'isolation (6) possède des cavités (11) pour le contact et le témoin de soudage.

7. Raccord pour soudage électrique isolé (1) selon l'une des revendications 1 à 6, **caractérisé en ce que** l'enveloppe extérieure (8) du raccord pour soudage électrique isolé (1) possède une lèvre en surplomb (9), la lèvre en surplomb (9) faisant saillie au-dessus du côté frontal (13) de l'élément d'isolation (6).

8. Raccord pour soudage électrique isolé (1) selon la revendication 7, **caractérisé en ce que** la lèvre en surplomb (9) possède sur le côté intérieur un tenon (16), le tenon (16) s'étendant sur le pourtour intérieur de la lèvre en surplomb (9).

9. Raccord pour soudage électrique isolé (1) selon l'une des revendications 1 à 8, **caractérisé en ce que** l'enveloppe extérieure (8) du raccord pour soudage électrique isolé (1) est en PUR ou en hybride polyurée/PUR.

10. Raccord pour soudage électrique isolé (1) selon l'une des revendications précédentes, **caractérisé en ce que** l'élément d'isolation (1) est en mousse dure de PUR.

11. Procédé de fabrication d'un raccord pour soudage électrique isolé (1) selon la revendication 1, le manchon pour soudage électrique (2) étant de préférence formé par un manchon pour soudage électrique courant et un élément d'isolation (6) précisément ajusté étant disposé sur le pourtour extérieur (7) du manchon pour soudage électrique (2), l'enveloppe extérieure (8) étant formée par surmoulage de l'élément d'isolation (6) disposé sur le manchon pour soudage électrique (2) ou encore par le procédé dit de formation de peau ou de moulage par injection et réaction (RIM).
